# EUROPEAN PATENT APPLICATION

(11) **EP 4 027 123 A1**
(43) Date of publication of application: **13.07.2022**
(21) Application number: 21150706.6
(22) Date of filing: 08.01.2021
(51) Int. Cl.: G01K 1/08, G01K 13/02, G01P 5/165

(54) **PROTECTIVE TUBE FOR INSERTION INTO A PIPE OR VESSEL WITH REDUCED SENSITIVITY TO VORTEX INDUCED VIBRATIONS**

(71) Applicant: Endress+Hauser Wetzer GmbH+Co. KG, 87484 Nesselwang (DE)
(72) Inventor: Del Bianco, Massimo, 20900 Monza (IT)
(74) Representative: Fremy-Koch, Sweetlana

(57) **Abstract**

The present invention concerns a method of producing a protective tube (1) for insertion into a pipe or vessel (2) containing a medium (M), the protective tube (1) comprising a tubular member (5) having a bore (6) extending between an upper (5a) and lower end (5b) of the tubular member (5), wherein the method comprises the steps of
- providing a preformed element (5) comprising a coiled wire with at least one turn,
- arranging the preformed element (5) around an outer surface of the tubular member (5), and
- welding the preformed element on an outer surface (S) of the tubular member (5).

## Description

The invention refers to a method of producing a protective tube for insertion into a pipe or vessel containing a medium.

Protective tubes in the field of measuring inserts for determining and/or monitoring a process variable of a medium are e.g. known in the form of thermowells for thermometers which serve for determining and/or monitoring the temperature of a medium. The measuring insert of a thermometer usually at least comprises one temperature sensor for determining and/or monitoring the temperature of the medium. The temperature sensor in turn comprises at least one temperature-sensitive component, e.g. in the form of a resistive element, especially a platinum element, or in the form of a thermocouple. However, protective tubes are also known in connection with gas sampling probes, where a gas sample is, especially dynamically, taken out from a pipe or vessel. The present invention thus generally relates to fluid processing and related measurements employing insertion type probe bodies and is not restricted to thermowells or gas sampling probes.

Such protective tubes are frequently exposed to the flow of the respective medium which causes different mechanical forces acting on the protective tube, e. g. shear forces or forces induced by coherent vortex shedding and which can result in vortex induced vibrations (VIV). Vortex shedding in fluid dynamics is known as "Kármán vortex street" and refers to a repeating pattern of swirling vortices in alternating directions caused by the unsteady separation of flow of a medium around a body, causing said body to vibrate. The closer the frequency of the vibrations is to the natural frequency of the body around which the medium flows, the more the body vibrates. The frequency of the vibrations is e. g. determined by several process parameters, such as the physical properties of the medium, the flow velocity and the shape of the body.

Due to the high risk of damage of protective tubes subject to VIV, these vibrations e.g. need to be duly considered during production. E.g. in the case of thermometers, standard methods, such as ASME PTC 19.3 TW-2000, are available, which define several design rules that help to reduce negative effects of coherent vortex shedding. The basic principle underlying the design rules is to increase the natural frequency of vibrations of the thermometer to separate the natural frequency from the vortex shedding frequency. In such way, the dangerous condition of resonant vortex induced vibrations becomes minimized. For this purpose, commonly the geometry of the thermometer is varied, e. g. by reducing its length and/or by increasing its diameter.

Alternatively, when functional constraints don't allow certain changes in the dimensions of the thermometer, mechanical supports or absorbers are frequently used to reduce the thermometer's sensitivity to vortex shedding. These mechanical supports or absorbers are usually fitted into a gap between the opening of the vessel or pipe and the outside surface of the thermometer. The supports or absorbers then increase the natural frequency of the thermometer by reducing the free length of the thermometer. However, it proves difficult to fit the supports or absorbers in such a way that a high level of coupling and therefore the desired effect can be achieved.

Yet, another approach to reduce VIV of protective tubes is to provide certain structures or structural elements on the protective tube. In this context, helical fins on the outer surface of the protective tube have been proven very successful, as e.g. described in US3076533A, US4991976, US7424396B2, US653931B1, US7836780B2, US2013/0142216A1, GB2442488A or WO2020/035402A1 for different configurations.

Based on these approaches the objective technical problem underlying the present invention to provide a method of producing such thermowell by a straightforward procedure.

This problem is solved by means of the method according to claim 1. Preferred embodiments are subject to the dependent claims.

The method of producing a protective tube for insertion into a pipe or vessel containing a medium according to the present invention, wherein the protective tube has a tubular member having a bore extending between an upper and lower end of the tubular member, comprises the steps of
- providing a preformed element comprising a coiled wire with at least one turn,
- arranging the preformed element around an outer surface of the tubular member, and
- welding the preformed element on an outer surface of the tubular member.

The preformed element preferably has a screw or coil like form with at least one helical winding. The protective tube is e.g. made by a metal, like stainless or carbon steel, or a nickel alloy. It is of advantage, if the preformed element is made from the same material as the protective tube.

The protective tube is usually mounted on the pipe or vessel via an opening which may have a process connection for connecting the protective tube to the vessel or pipe. The protective tube at least partially extends into an inner volume of the vessel or pipe and is at least partially in contact with the flowing medium. The protective tube may be arranged such that its longitudinal axis proceeds perpendicular to the flow direction of the medium. However, also angles between the longitudinal axis and the flow direction different from 90° can be employed.

In the state of the art, protective tubes with at least one helical structure are typically produced by a machining process or by welding a wire onto the outer surface of the tubular member, both being comparably elaborate procedures. According to the present invention, on the other hand, a preformed element is provided, which can be easily mounted and to the outer surface of the tubular member. Such procedure further has the advantages that it is cheap and that retrofitting of existing protective tubes in order to reduce their sensitivity to vortex shedding becomes possible in an easy and straightforward manner.

In one embodiment the preformed element is embodied and/or arranged such, that after welding on the tubular member it forms at least one helical fin, winding around the outer surface of the tubular member and defining a flow channel along at least a part of the tubular member.

In this concern, it is of advantage, if at least one geometrical parameter of the at least one helical fin is chosen such that it depends on at least one process condition of the medium in the vessel or pipe, in particular at least one of a flow profile, a flow velocity, a pressure, a temperature, a density or a viscosity of the medium, a diameter, a volume or a roughness of the pipe or vessel, or a length or diameter of the tubular member. In this regard, reference is made to the yet unpublished European patent application with file reference 20195284.3. The content of this application is fully incorporated by reference.

Choosing geometrical parameters of the helical fin enables to provide a protective tube with at least one customized helical fin that is chosen in dependence of the specific applied process. The geometrical parameter is at least one parameter defining the form and/or shape of the flow channel and/or the at least one helical fin, especially a height, a pitch, a width, a depth or a shape of the at least one helical fin, or a cross-sectional area of the flow channel. All these medium and pipe/vessel related parameters do have an impact on VIV. The geometrical parameters characterizing the helical fins are functions of the process conditions.

Preferably, a pitch of the helical fin is in the range of 1-4 times a diameter of the wire of the preformed element.

The protective tube can be used in a wide range of applications and can e.g. be part of a gas sampling probe with an inlet and outlet end or a Pitot tube. However, in one embodiment, the protective tube is closed in one end section in order to form a protective tube in the form of a thermowell. In such case, the protective tube may serve for receiving a measuring insert for determining and/or monitoring a process variable of a medium, especially the temperature of the medium. The measuring insert in turn preferably has a rod like form and may be inserted into the bore of the tubular member.

For producing the weld between the tubular member and the preformed element, several options are available which all fall under the scope of protection of the present invention. Several preferred embodiments are depicted in the following:
In one embodiment, a weld is produced in an upper and lower end section of the preformed element. In this embodiment, only two welds are needed to mount the preformed element on the tubular member.

In another embodiment, at least one weld is produced in a center area of the preformed element. Such additional weld can yield in a reinforcement of the connection between the tubular member and the preformed element. This is of particular advantage in case of comparably long tubular members and long preformed elements.

One embodiment comprises that the weld is produced along one turn of the preformed element. E.g. in case of two welds in the lower and upper end sections of the tubular member, the preformed element is welded in an area given by the first and last turn of the coiled wire. By such procedure, a circular weld can be produced.

One embodiment comprises that an upper and/or lower end section of the preformed element are embodied in the form of a ring, and wherein a coiled section is arranged between the upper and lower end section. The preformed element thus closes with a ring section.

In this regard, it is of advantage, if the weld is produced in the area of a ring. This embodiment thus also enables to produce a circular weld.

All the described preferred embodiments relating to production of the weld advantageously do not necessitate a continuous weld along the entire preformed element.

Another embodiment of the inventive method comprises that a cross-sectional area of the preformed element has the form of a circle, an ellipse or a square.
Finally, one embodiment comprises that a diameter of the wire of the preformed element is in the range of 5-20% of a diameter of the tubular member.

The present invention will now be explained in more detail by means of Figures Fig. 1-Fig.6.
Fig. 1: illustrates the origin of vortex shedding for an insertion body exposed to a flowing medium;
Fig. 2: shows a thermometer having a state of the art thermowell;
Fig. 3: shows a (a) thermowell with a plurality of helical fins according to the state of the art forming a plurality of flow channels, and (b) flow channels optimal for avoiding VIV;
Fig. 4: illustrates the influence of the flow profile and installation position on the occurrence of VIV;
Fig. 5: shows a first embodiment of a protective tube in the form of a thermowell produced by the method according to the present invention; and
Fig. 6: shows a second embodiment of a protective tube in the form of a thermowell produced by the method according to the present invention.

In the figures, the same elements are always provided with the same reference symbols.

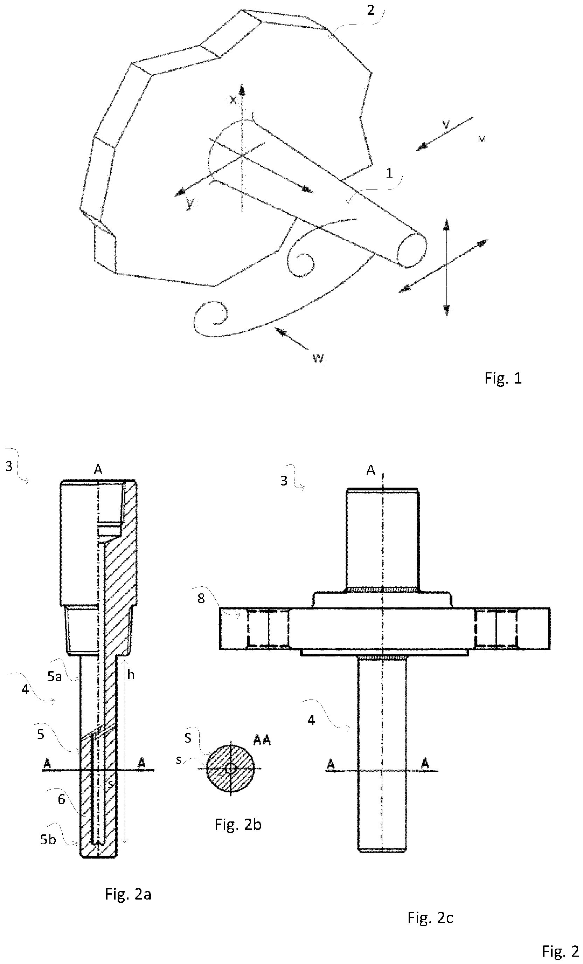

Fig. 1 illustrates the origin of vortex shedding w at a cylindrical, conically tapered protective tube 1 exposed to a flowing medium M in a pipe 2, which is indicated by one of its walls. Downstream of the protective tube 1 in the flow direction v of the medium, a ridge-like pattern develops. Depending on the flow velocity v of the medium M, this can lead to coherent vortex shedding which in turn may cause the protective tube 1 to vibrate.

The vibrations are mainly due to two forces acting on the protective tube 1, a shear force in the in y-direction and a lifting force in x-direction. The shear force causes oscillations at a frequency fₛ, while the lifting force causes oscillates at a frequency of 2fₛ. The frequency fₛ now depends on the flow velocity v of the medium M, and on various physical or chemical medium properties such as its viscosity and density, as well as on the dimensions of the protective tube 1, such as its diameter and length. The closer the frequency fₛ is to the natural frequency of the protective tube 1 and the higher the flow velocity v of the medium M, the greater are the resulting oscillation causing forces.

As a result of the vibration causing forces, the protective tube 1 can be damaged or even break down completely. This is known as the so-called resonance condition.

Fig. 2 exemplarily and without limitation to such embodiment shows a state of the art thermometer 3 having a protective tube 1 in the form of a thermowell 4. As can be seen in Fig. 2a, the thermowell 4 comprises a tubular member 5 having a first end section 5a, and a second end section 5b with a closed end. The tubular member 5 further comprises a bore 6 forming a hollow space within the tubular member 5, which is defined by an inner surface s and a predeterminable height h parallel to a longitudinal axis A of the tubular member 5, which bore 6 serves for receiving a measuring insert 7 [not shown] for determining and/or monitoring the process variable, e.g. the temperature of the medium M.

Further, as illustrated in Fig. 2c, a fastening unit 8 is provided, which exemplarily is attached to the tubular member 5, here. This fastening unit 8 is a process connection and serves for mounting the thermowell 4 to the pipe 2 [not shown] such that the tubular member 5 at least partially extends into an inner volume of pipe 2 and such that it is at least partially in contact with the flowing medium M.

The outer surface S the thermowell 4 of Fig. 2 has an essentially round shape as becomes visible in Fig. 2b. However, such construction can easily lead to undesired vortex induced vibrations of the thermometer 3.

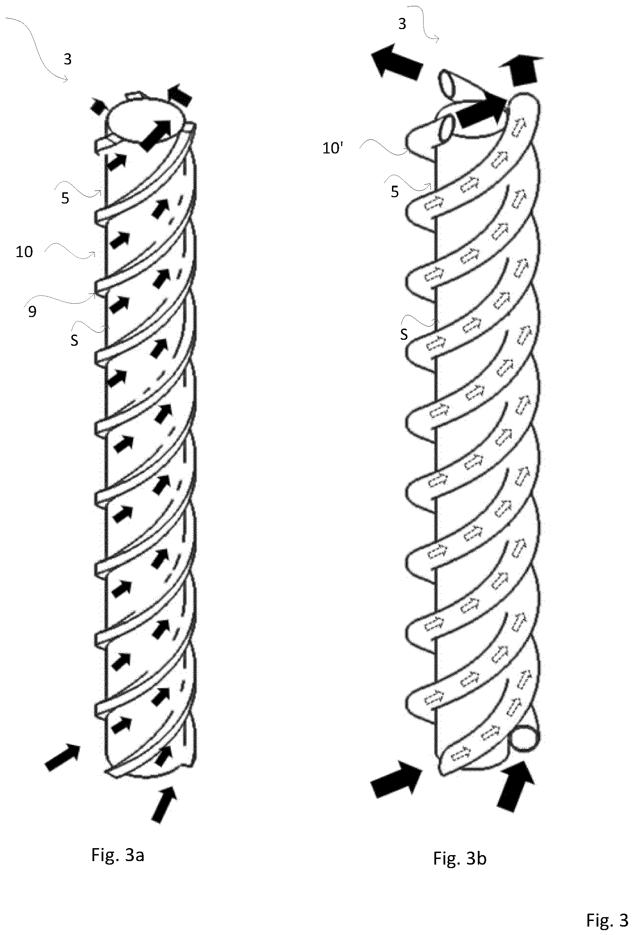

To overcome the problems associated with coherent vortex shedding, protective tubes 1 with helical fins 9 which are typically arranged on the outer cross-sectional surface S of the protective tube 3 have been suggested. An exemplarily protective tube 3 having three such helical fins 9 is shown in Fig. 3a. The helical fins 9 form flow channels 10 along the tubular member 5 and thus reduce VIV of the protective tube 3. Each flow channel 10 is formed by the volume between to adjacent helical fins 9 which proceed around the tubular member 5 along its length axis A.

Ideally, such flow channels 10 should be closed channels 10', as illustrated in Fig. 3b. Such closed channels 10' would be able to carry medium M from the closed end section 5b towards the first end section 5a creating a suction mechanism for converting kinetic energy of the medium into pressure variations. Such variation in the flow velocity and pressure distribution would create a multidimensional motion of the medium which allows for decreasing of even suppressing VIV on the protective tube 3. Accordingly, the effectiveness of avoiding VIV is strongly related to the construction of the helical fins 9. The more the final shape resembles the ideal construction of Fig. 3b, the better the performance with respect to VIV.

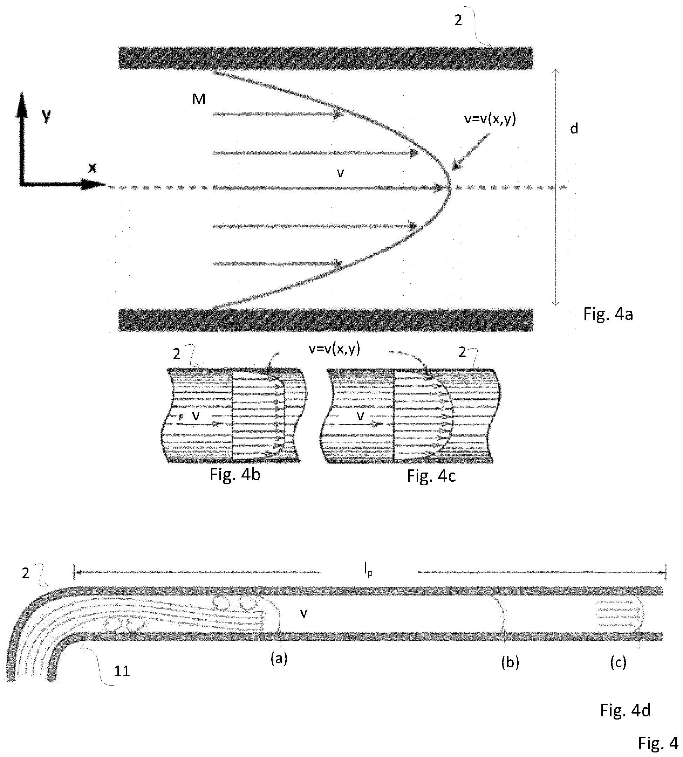

A second issue is the flow profile v(x,y) of the medium M in the pipe or vessel 2. Ideally, the flow profile v(x,y) for a circular pipe has a parabolic shape, as illustrated in Fig. 4a. Accordingly, the medium M has the highest relative velocity vᵣₑₗ within the center region of the pipe or vessel 2. The profile slightly varies depending on the length Iₚ of the pipe or vessel 2, as illustrated for the case of a comparably short pipe sections 2 in Fig. 4b and a comparably long pipe section 2 for Fig. 4c.

Additionally, the installation position and/or the presence of flow modifying elements 11, like the pipe corner piece shown in Fig. 4d, within a pipe/vessel 2 system may be considered as they also strongly influence the flow profile. After passing the pipe corner piece, the flow profile v(x,y) is asymmetrical (a) and only slowly transforms through several transition areas (b) to a symmetrical profile v(x,y) in a straight pipe 2 section following the pipe corner piece 11.

The present invention now provides a method for producing a protective tube employing a helical structure on an outer surface of a tubular member of the protective tube in a straightforward manner. In the following, three especially preferred embodiments of thermowells produced by an inventive method, will be shown. The invention is however, not limited to protective tubes in the form of a thermowell but rather are applicable to a wind range of protective tubes, in particular also to gas sampling probes and pitot tubes.

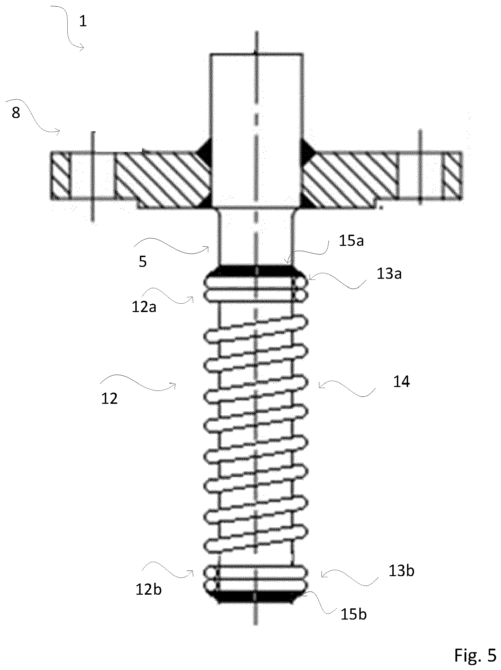

A thermowell produced according to a first preferred embodiment of the method according to the present invention is shown in Fig. 5. The protective tube 1 with fastening means 8 has a tubular member 5. Along a section of the tubular member 5 a preformed element 12 comprising a coiled wire with at least one turn is arranged. Note that other embodiments can also comprise arranging of the preformed element along the entire length of the tubular member 5.

The preformed element 12 shown in Fig. 5 is provided with a first ring 13a in its upper end section 12a and a second ring 13b in the second end section 12b. Between the two rings 13a, 13b a coiled section 14 is provided. The preformed element 12 is welded to the tubular member 5 by means of two welds 15a, 15b produced in the area of the rings 13a, 13b.

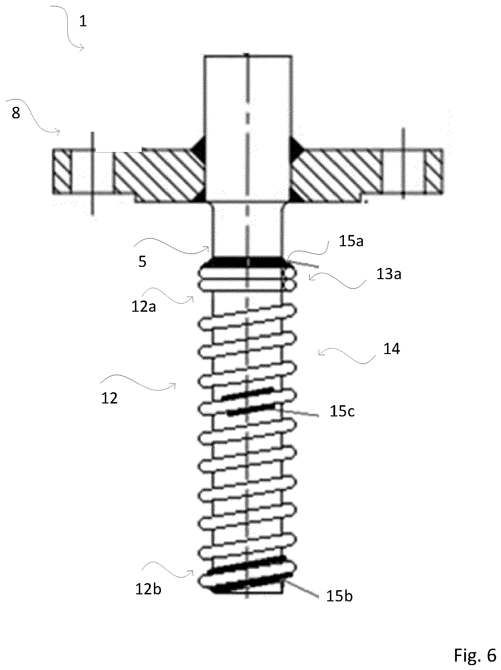

A second preferred embodiment is subject to Fig. 6. In contrast to the thermowell 1 shown in Fig. 5, for the embodiment of Fig. 6 the preformed element 12 has only one ring 13a in the upper end section 12a, in which a first weld 15a is produced. In the lower end section 12b, a second weld 15b is produced along one turn of the preformed element 12, here the last turn of the preformed element 12. A third weld 15c is produced in a center area of the preformed element 12. Such weld 15c serves for reinforcement of the connection between the preformed element 12 and the tubular member 5. It shall be noted, that such additional weld 15c is optional. Also, other embodiments may comprises that no rings 13a, 13b are employed in the end sections 12a, 12b of the tubular member. Rather, any of the embodiments shown and also described previously can be combined with another.

### List of reference symbols

- 1: protective tube
- 2: pipe, vessel
- 3: thermometer
- 4: thermowell
- 5: tubular member
- 5a: first end section
- 5b: second end section
- 6: bore
- 7: measuring insert
- 8: fastening unit
- 9: helical fin
- 10: flow channel
- 11: flow modifying element
- 12: preformed element
- 12a,12b: end sections of the preformed element
- 13a, 13b: ring
- 14: coiled section

- M: medium
- v: velocity of the medium
- vᵣₑₗ: relative flow velocity
- v (x,y): flow profile
- W: vortex shedding
- A: longitudinal axis of the tubular member
- s: inner cross-sectional surface
- S: outer cross-sectional surface
- d: pipe diameter
- h: length of tubular member

## Claims

1. Method of producing a protective tube (1) for insertion into a pipe or vessel (2) containing a medium (M), the protective tube (1) comprising a tubular member (5) having a bore (6) extending between an upper (5a) and lower end (5b) of the tubular member (5),
wherein the method comprises the steps of
- providing a preformed element (5) comprising a coiled wire with at least one turn,
- arranging the preformed element (5) around an outer surface of the tubular member (5), and
- welding the preformed element on an outer surface (S) of the tubular member (5).

2. Method according to claim 1,
wherein the preformed element (5) is embodied and/or arranged such, that after welding on the tubular member (5) it forms at least one helical fin, winding around the outer surface (S) of the tubular member (5) and defining a flow channel (10) along at least a part of the tubular member (5).

3. Method according to claim 2,
wherein at least one geometrical parameter of the at least one helical fin is chosen such that it depends on at least one process condition of the medium (M) in the vessel or pipe (2), in particular at least one of a flow profile, a flow velocity, a pressure, a temperature, a density or a viscosity of the medium (M), a diameter, a volume or a roughness of the pipe or vessel (2), or a length or diameter of the tubular member (5).

4. Method according to any of the preceding claims,
wherein the tubular member (5) is closed in one end section (12b) in order to form a protective tube (1) in the form of a thermowell.

5. Method according to any of the preceding claims,
a weld (15) is produced in an upper (12a) and lower end section (12b) of the preformed element (12).

6. Method according to any of the preceding claims,
wherein at least one weld (15) is produced in a center area of the preformed element (12).

7. Method according to any of the preceding claims,
wherein the weld (15) is produced along one turn of the preformed element (12).

8. Method according to any of the preceding claims
wherein an upper (12a) and/or lower end section (12b) of the preformed element (12) are embodied in the form of a ring (13a, 13b), and wherein a coiled section (14) is arranged between the upper (12a) and lower end section (12b).

9. Method according to claim 8,
wherein the weld (15) is produced in the area of a ring (13a, 13b).

10. Method according to any of the preceding claims,
wherein a cross-sectional area of the preformed element has the form of a circle, an ellipse or a square.

11. Method according to any of the preceding claims,
wherein a diameter of the wire of the preformed element (5) is in the range of 5-20% of a diameter of the tubular member (12).
